# EUROPÄISCHE PATENTSCHRIFT

(11) **EP 1 099 735 B1**
(45) Veröffentlichungstag und Bekanntmachung des Hinweises auf die Patenterteilung: **28.01.2004**
(21) Anmeldenummer: 00124043.1
(22) Anmeldetag: 04.11.2000
(51) Int. Cl.: C09D 17/00, C09D 11/02, C09D 7/12

(54) **Wässrige Russdispersionen**
Aqueous carbon black dispersions
Dispersions aqueuses de noir de carbone

(30) Priorität: 11.11.1999 DE 19954260
(43) Veröffentlichungstag der Anmeldung: 16.05.2001
(73) Patentinhaber: Degussa AG, 40474 Düsseldorf (DE)
(72) Erfinder: Kalbitz, Werner, 63517 Rodenbach (DE); Karl, Alfons, Dr., 63584 Gründau (DE); Kleinhenz, Horst, 63538 Grosskrotzenburg (DE); Tauber, Gerd, 63500 Seligenstadt (DE)

(56) Entgegenhaltungen:
- EP-A- 0 802 247
- EP-A- 0 819 737
- EP-A- 0 896 986
- EP-A- 0 969 052
- EP-A- 1 035 178

## Beschreibung

Die Erfindung betrifft wäßrige Rußdispersionen, ein Verfahren zu ihrer Herstellung und ihre Verwendung.

Wäßrige Rußdispersionen werden zur Herstellung von Druckfarben oder auch direkt als Tinten bei zum Beispiel Tintenstrahldruckern (Ink-Jet) eingesetzt.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen aus einer Düse auf ein Empfangsmaterial gespritzt, wobei deren Ablenkung elektronisch steuerbar ist. Diese Technik, auch als druckloses Drucken bezeichnet, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel und relativ preiswert und wird deshalb auch im Computerdruck, etwa als Arbeitsplatzdrucker, verwendet. Zunehmend kommt das Ink-Jet-Verfahren auch im industriellen Bereich, etwa in der Außenwerbung, zur Anwendung. In der Außenwerbung muß die Tinte besondere Anforderungen an Lichtechtheit und Wasserbeständigkeit erfüllen. Darüber hinaus müssen die Farbbestandteile sehr feinteilig sein, damit die Druckdüsen nicht verstopfen. Als farbgebende Substanzen werden sowohl Farbstoffe wie in jüngerer Zeit auch Pigmente verwendet. Letztere haben den Vorteil gegenüber Farbstoffen, daß die Lichtechtheit sehr hoch ist und daß sie wasserbeständig sind. Pigmente haben einen Nachteil gegenüber Farbstoffen, der darin besteht, daß sie nur durch eine Behandlung mit oberflächenaktiven Substanzen (Tensiden) stabile Dispersionen mit hoher Lagerbeständigkeit bilden. Pigmentteilchen liegen nicht in der Form von Primärteilchen vor sondern in der Form von Aggregaten. Pigmentaggregate sind größer als lösliche Farbstoffe. Sind Pigmentaggregate nicht ausreichend fein dispergiert, verstopfen sie die Düsen des Druckkopfes. Große Aggregate verändern außerdem die Lichtabsorptionseigenschaften des Pigmentrußes. Eine Vergräulichung der Drucke und ein Verlust an Deckkraft ist die Folge.

Erste Patente, die die Verwendung von Pigmentrußen in Ink-Jet-Tinten behandeln, sind die Schriften US-A 5,085,698 und US-A 5,320 668. Darin wird die Verwendung von wasserlöslichen Acrylaten zur Pigmentstabilisierung beschrieben.

Es ist bekannt, wäßrige Rußdispersionen mit Rußen, deren mittlere Primärteilchengröße nicht größer als 30 nm und deren DBP-Zahl mindestens 75 ml/100 g beträgt, herzustellen (US-A 5,538,548).

Es ist weiterhin bekannt, wäßrige Rußdispersionen unter Verwendung von wasserlöslichen organischen Lösungsmitteln und wasserlöslichen Acrylharzen herzustellen (US-A 5,609,671).

Die bekannten wäßrigen Rußdispersionen weisen den Nachteil auf, daß diese zur Herstellung beziehungsweise Stabilisierung der Dispersion mindestens ein Netzmittel benötigen.

Es besteht somit die Aufgabe, Rußdispersionen, die diesen Nachteil nicht aufweisen, herzustellen.

Gegenstand der Erfindung sind wäßrige Rußdispersionen, dadurch gekennzeichnet, daß die Rußdispersion netzmittelfrei ist und mindestens einen ozonoxidierten Ruß enthält.

Als Ausgangsruß für die Ozonoxidation können Furnace-, Gas-, Flamm-, Acetylenruße, Si-haltige Ruße, bekannt aus WO 98/45361 oder DE 19613796, Inversionsruße, bekannt aus DE 19521565, und metallhaltige Ruße, bekannt aus WO 98/42778 verwendet werden. Als Ausgangsruß für die Ozonoxidation können bevorzugt Gasruße, besonders bevorzugt feinteilige Gasruße wie zum Beispiel FW 285, FW 1 oder FW 18 der Firma Degussa-Hüls Aktiengesellschaft verwendet werden. Die Ozonoxidation der Ausgangsruße kann nach dem bekannten Verfahren aus DE 198 240 47 erfolgen.

Der ozonoxidierte Ruß kann Flüchtige-Bestandteile (DIN 53552) von größer 25%, bevorzugt größer 30%, enthalten. Die wäßrige Rußdispersion kann übliche, zur Herstellung einer gebrauchsfertigen Tinte benötigte Zusätze wie beispielsweise Glykol, Polyvinylpyrolidon, Isopropanol, 1,2-Propandiol oder pH-Regulierer enthalten. Der Rußgehalt in der fertigen Dispersion kann maximal 30%, bevorzugt maximal 15%, besonders bevorzugt 5-15%, betragen.

Der pH-Wert der fertigen Dispersion kann pH 4-12, bevorzugt pH 6-11, besonders bevorzugt pH 8-10, betragen.

Der ozonoxidierte Ruß besitzt eine große Anzahl an Oberflächengruppen. Deshalb ist kein Netzmittel zur Stabilisierung der wäßrigen Rußdispersion notwendig. Die erfindungsgemäße Rußdispersion hat den Vorteil einer niedrigeren Viskosität und einer hohen Oberflächenspannung. Durch die höhere Oberflächenspannung können kleinere Tröpfchen bei dem Ink-Jet-Verfahren und dadurch höhere optische Dichten auf dem Papier erzeugt werden. Zusätzlich kann eine geringere Verunreinigung des Druckkopfes erfolgen.

Ein weiterer Gegenstand der Erfindung ist ein Verfahren zur Herstellung der wäßrigen Rußdispersion, welches dadurch gekennzeichnet ist, daß man ozonoxidierten Ruß gegebenfalls unter Zugabe von Zusatzstoffen in Wasser dispergiert und gegebenfalls für die Dispergierung Perlmühlen, Ultraschall-Geräte oder ein Ultra-Turrax verwendet. Im Anschluß an die Dispergierung kann die Rußdispersion zentrifugiert oder gefiltert werden.

Die erfindungsgemäßen wäßrigen Rußdispersionen können zur Herstellung von Tinten, Lacken und Druckfarben, insbesondere Ink-Jet-Tinten, Drucktinten und wasserbasierende Lacksysteme, verwendet werden.

### Beispiele

Die erfindungsgemäßen Rußdispersionen werden wie folgt hergestellt:

### 1. Vorbereitung der Lösung

Zur Gesamtmenge destilliertes Wasser werden 50% der Menge an Zusatzstoffe zur pH-Wert Regulierung beigefügt und per Hand oder Rührer homogenisiert.

### 2. Einarbeitung des Rußes

Das ozonoxidierte Ruß wird per Hand oder mit einem Rührer in die vorbereitete Lösung eingearbeitet.

### 3. Dispergierung

Die in Punkt 2 vorbereitete Dispersion wird mit einem Ultraschall-Gerät dispergiert.

### 4. Nachbereitung der Dispersion

24 h nach der Dispergierung wird die Restmenge an Zusatzstoffen zur pH-Wert Regulierung, sowie die Gesamtmenge 1,2-Propandiol unter Rühren zugegeben. Grobe Teilchen können von der erhaltenen Dispersion durch Zentrifugation oder Filtration abgetrennt werden.

In Tabelle 1 sind die analytischen Daten des ozonoxidierten Rußes dargestellt, der gemäß DE 19824047 Beispiel 1 hergestellt wird.

Die Zusammensetzung der wäßrigen Rußdispersion sowie ihre Eigenschaften sind in der Tabelle 2 dargestellt.

**Tabelle 1:**

| Gasruß FW 18 ozonoxidiert | | |
|---|---|---|
| Flüchtige Bestandteile | % | 31,5 |
| DIN 53552 | | |

**Tabelle 2:**

| **Bestandteile** | **Einheit** | **Vergleichsbeispiel** | **Beispiel** |
|---|---|---|---|
| Farbruß FW 18 | % | 15 | - |
| Farbruß FW 18 | % | - | 10 |
| ozonoxidiert | | | |
| Netzmittel: | | | |
| Lutensol A030 | % | 6 | - |
| Hypermer CG6 | % | 2 | - |
| | | | |
| 1,2-Propandiol | % | - | 6,7 |
| Dest. Wasser | % | 76,8 | 80,8 |
| pH-Regulierer: | | | |
| Dimethylethanolamin | % | 0,2 | 2,5 |

| **Eigenschaften** | | | |
|---|---|---|---|
| Mittlerer Teilchendurchmesser | nm | 90 | 85 |
| pH-Wert | | 8,0 | 9,0 |
| Viskosität, RT | MPas | 10 | 2,6 |
| Oberflächenspannung | MN/m | 43 | 67 |
| Optische Dichte | | 1,03 | 1,35 |
| (Kopierpapier) | | | |

Die Oberflächenspannung wird mit der Plattenmethode nach DIN 53 914 (3/80) bei Raumtemperatur bestimmt.

Die mittlere Teilchengröße wird mit der Photonen-Korrelations-Spektroskopie bestimmt.

Die optische Dichte wird mit Mcbeth RD 918 Densitometer an Prüfdrucken, hergestellt auf einem Hewlett Packard Drucker 660 C, bestimmt.

Der pH-Wert wird direkt in der Rußdispersion mit einer handelsüblichen Meßelektrode bestimmt.

Die erfindungsgemäße wäßrige Rußdispersion zeigt eine niedrigere Viskosität, höhere Oberflächenspannung und eine höhere optische Dichte als das Vergleichsbeispiel.

Die bei der Herstellung der Rußdispersionen verwendeten Komponenten sind wie folgt charakterisiert:

Der Farbruß FW 18 ist ein Gasruß mit einer mittleren Primärteilchengröße von 15 nm.

Lutensol AO 30 ist ein nichtionisches Netzmittel (Hersteller: BASF).

Hypermer CG 6 ist ein nichtionisches Netzmittel, bestehend aus vernetzter Polyoxyethylenacrylsäure (Hersteller: ICI).

## Patentansprüche

1. Wäßrige Rußdispersionen, **dadurch gekennzeichnet, daß** die Rußdispersion netzmittelfrei ist, mindestens einen ozonoxidierten Ruß enthält, der Rußgehalt in der fertigen Dispersion 5-15 % beträgt und der ozonoxidierte Ruß flüchtige Bestandteile von größer 25 % enthält.

2. Wäßrige Rußdispersion nach Anspruch 1, **dadurch gekennzeichnet, daß** die Dispersion einen ozonoxidierten Gasruß enthält.

3. Wäßrige Rußdispersion nach Anspruch 1, **dadurch gekennzeichnet, daß** der pH-Wert zwischen 4 und 12 beträgt.

4. Verfahren zur Herstellung der wäßrigen Rußdispersionen nach Anspruch 1, **dadurch gekennzeichnet, daß** man ozonoxidierten Ruß gegebenfalls unter Zugabe von Zusatzstoffen in Wasser dispergiert und gegebenenfalls für die Dispergierung Perlmühlen, Ultraschall-Geräte oder ein Ultra-Turrax verwendet.

5. Verfahren zur Herstellung der wäßrigen Rußdispersionen nach Anspruch 4, **dadurch gekennzeichnet, daß** die wäßrige Rußdispersion im Anschluß an die Dispergierung zentrifugiert oder gefiltert wird.

6. Verwendung der wäßrigen Rußdispersionen gemäß den Ansprüchen 1 bis 3 zur Herstellung von Ink-Jet-Tinten, Drucktinten und wasserbasierende Lacksysteme.

## Claims

1. Aqueous carbon black dispersions, **characterised in that** the carbon black dispersion contains no wetting agent and contains at least one ozone-oxidised carbon black, the carbon black content in the finished dispersion is 5-15% and the ozone-oxidised carbon black has a volatile constituent content of greater than 25%.

2. Aqueous carbon black dispersion according to claim 1, **characterised in that** the dispersion contains an ozone-oxidised gas black.

3. Aqueous carbon black dispersion according to claim 1, **characterised in that** the pH value is between 4 and 12.

4. Process for the production of the aqueous carbon black dispersions according to claim 1, **characterised in that** ozone-oxidised carbon black is dispersed in water, optionally with the addition of additives, and dispersion is optionally performed using bead mills, ultrasound apparatus or an Ultra-Turrax.

5. Process for the production of the aqueous carbon black dispersions according to claim 4, **characterised in that**, once dispersion has been performed, the aqueous carbon black dispersion is centrifuged or filtered.

6. Use of the aqueous carbon black dispersions according to claims 1 to 3 for the production of inkjet inks, printing inks and water-based lacquer systems.

## Revendications

1. Dispersions aqueuses de noir de carbone,
**caractérisées en ce que**
la dispersion de noir de carbone est exempte d'agent mouillant, contient au moins un noir de carbone oxydé à l'ozone, la teneur en noir de carbone dans la dispersion finie est de 5 à 15 % et le noir de carbone oxydé à l'ozone contient des constituants volatils à plus de 25 %

2. Dispersion aqueuse de noir de carbone selon la revendication 1,
**caractérisée en ce que**
la dispersion contient un noir de carbone oxydé à l'ozone.

3. Dispersion aqueuse de noir de carbone selon la revendication 1,
**caractérisée en ce que**
le pH est compris entre 4 et 12.

4. Procédé de préparation des dispersions aqueuses de noir de carbone selon la revendication 1,
**caractérisé en ce qu'**
on disperse le noir de carbone oxydé à l'ozone le cas échéant en ajoutant des additifs dans l'eau et, le cas échéant, on utilise, pour la dispersion, des disperseurs à billes, des appareils à ultrasons ou un Ultra-Turrax.

5. Procédé de fabrication des dispersions aqueuses de noir de carbone selon la revendication 4,
**caractérisé en ce qu'**
on centrifuge ou filtre la dispersion aqueuse de noir de carbone à l'issue de la dispersion.

6. Utilisation des dispersions aqueuses de noir de carbone selon les revendications 1 à 3, pour fabriquer des encres pour impression à jet d'encre, des encres d'imprimerie et des systèmes de peinture à base d'eau.
